## Europäisches Patentamt

(19) **European Patent Office**

Office européen des brevets

(11) Publication number: **0 025 062**
**B1**

(12) **EUROPEAN PATENT SPECIFICATION**

(45) Date of publication of patent specification: **30.05.84**

(51) Int. Cl.³: **B 29 H 9/10**, B 29 H 7/00, F 16 J 15/32

(21) Application number: **80900625.7**

(22) Date of filing: **12.03.80**

(86) International application number: **PCT/US80/00274**

(87) International publication number: **WO 80/02008 02.10.80 Gazette 80/22**

(54) **METHOD FOR MAKING A LIP TYPE SHAFT SEAL HAVING A RESIN LINER.**

(30) Priority: **23.03.79 US 23141**

(43) Date of publication of application: **18.03.81 Bulletin 81/11**

(45) Publication of the grant of the patent: **30.05.84 Bulletin 84/22**

(84) Designated Contracting States: **DE FR GB**

(56) References cited:
FR-A-1 508 575
FR-A-2 171 567
FR-A-2 310 862
FR-A-2 373 003
JP-B-46 002 381
US-A-3 004 298
US-A-3 462 333
US-A-3 536 806
US-A-3 851 037
US-A-4 006 210
US-A-4 155 153
US-A-4 159 298

(73) Proprietor: **GARLOCK INC.**
**P.O.Box 8090**
**Longview, TX 75601 (US)**

(72) Inventor: **O'NEAL, Robert D.**
**22 Eaglebrook Lane**
**Gastonia, NC 28052 (US)**
Inventor: **Bainard, Dean R.**
**Route 2**
**Clover, SC 29710 (US)**
Inventor: **CATHER, Douglas A., Jr.**
**1325 Bucknell Avenue**
**Gastonia, North Carolina 28052 (US)**

(74) Representative: **Röse, Horst, Dipl.-Ing. et al**
**Patentanwälte Dipl.-Inge. Röse, Kosel & Sobisch**
**Odastrasse 4a Postfach 129**
**D-3353 Bad Gandersheim 1 (DE)**

Courier Press, Leamington Spa, England.

## Description

### Technical field

This invention relates to shaft seals and to a method for molding an annular lip type shaft seal of the type having a resin liner (such as polytetrafluoroethylene) according to the preamble of claim 1.

### Background of the prior art

Methods are known for molding an annular lip type shaft seal of the type having an elastomeric body or seal element with a resin liner (such as of polytetrafluoroethylene) integrally molded therewith and bonded thereto. Such known method includes placing a resin washer, an elastomeric preform and metal shell in a mold and closing the mold, see for example, Japanese patent publication JP—B—46-23681, announced July 7, 1971 in the Japanese Patent Agency Patent Gazette. Such prior art has the problem of control over the degree or uniformity of axial length to which the resin liner is formed or extruded axially beyond the molded or trimmed lip of the seal, during the molding operation. If the liner flows too far it can thin out and split and can become trapped between elastomer and the metal shell causing bond problems in critical areas, or the liner can occupy part of the flex section of the seal affecting seal performance. This problem becomes more acute with increases in the viscosity or shearing force of the elastomer and with increasing lip diameters of the seal as well as with other factors involving the characteristics of the type and thickness of the resin being used.

The French patent publication FR—A—1 508 575 describes an annular lip type shaft seal and a method of molding it, which consists in placing a flat liner element of polytetrafluoroethylene, a preform of caoutchouc and a metal seal shell in an open mold, closing the mold, applying heat and pressure to it, thereby forming a liner out of said liner element, a shaft seal element out of said preform, which are connected to each other and to said seal shell, thus producing an annular shaft seal. The mold consists of two parts with the lower part showing an annular lip forming surface facing radially outwardly and axially inwardly, whereby an annular shoulder having an axially inwardly facing shoulder surface is located axially between a liner forming surface and a seal element forming surface of said lip forming surface. The liner forming surface is radially recessed inwardly relative to said seal element forming surface. However this publication does not deal with the above cited problem of controlling the flow of liner material during molding either.

It is an object of the present invention to provide an improved method for controlling the resin liner flow during molding and thereby to reduce the percentage of rejects occurring during molding shaft seals having resin liners due to undesired flow of the liner during molding.

It is another object of this invention to prevent liner material from entering the seal flex section.

It is another object of the present invention to provide a method for making an annular lip type shaft seal of the type having an annular elastomeric shaft seal element and a resin liner integrally molded therewith and bonded thereto, wherein the mold is provided with a step or shoulder and wherein the parameters of the angle the shoulder surface makes with the mold core, the shoulder height with respect to the liner thickness, and the initial viscosity of the elastomeric preform are maintained at certain relative values or ranges of values. A solution of the above objects is provided by the invention as claimed in claim 1 and claim 11.

### Brief description of the drawings

The present invention will be more fully understood by reference to the following detailed description thereof, when read in conjunction with the attached drawings, wherein like reference numerals refer to like elements and wherein:

Figs. 1—3 are partial cross-sectional views through a mold showing the molding method of the present invention, with Fig. 1 showing the mold open, Fig. 2 showing the mold partially closed and Fig. 3 showing the mold completely closed;

Fig. 4 is a partial cross-sectional view of a shaft seal made according to the method of the present invention; and

Fig. 5 is an enlarged, partial view of one portion of the seal and mold showing various of the parameters involved.

### Detailed description of the invention

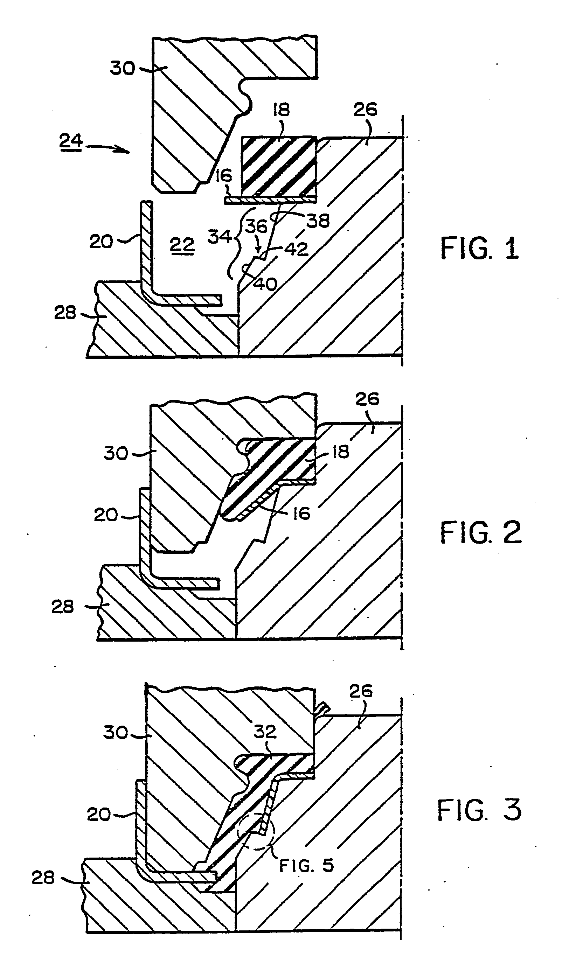

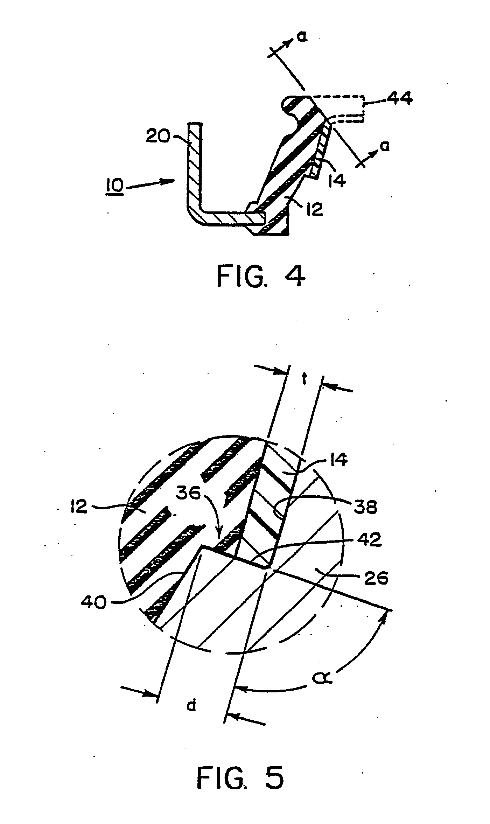

With reference now to the drawings, Figs. 1—4 show the method of the present invention as applied to a trimmed lip seal and Fig. 5 is an enlarged partial cross-sectional view of the step or shoulder portion of the mold and molded seal showing various ones of the critical relationships that are involved.

Figs. 1—4 show the method of the present invention for molding an annular, lip type shaft seal 10 (see Fig. 4) of the type having an annular molded elastomeric shaft seal element 12 and a resin liner 14. Referring to Fig. 1 the method comprises placing a flat washer 16 of resin liner material (preferably polytetrafluoroethylene), an elastomeric preform 18, and an annular metal shell 20 in a cavity 22 of an open compression mold 24. The mold 24 includes a mold core 26, a lower die member 28, and a moveable upper die member 30. The mold 24 is shown in its open position in Fig. 1 and in its closed position in Fig. 3.

The mold is then closed as shown in Figs. 2 and 3 with heat and pressure being applied as is well-known to those skilled in the art. During this time, the flat resin washer 16 is formed into the resin lip liner 14, the elastomeric preform 18 is caused to flow into the shape of the elastomeric shaft seal element 12, the liner 14 is bonded to the seal element 12 in a manner well-known to those skilled in this art, and the elastomer of the seal element 12 is cured, all substantially simultaneously.

The mold 24 is then opened and a semifinished seal assembly 32 (see Fig. 3) is removed. An excess portion 44 of the seal assembly 32 (shown in dotted lines in Fig. 4) is then trimmed off along the line "a—a" to produce the finished shaft seal 10.

The mold core 26 includes (see Figs. 1 and 5) an annular lip forming surface 34 facing outwardly and axially inwardly. The direction "radially outwardly" is of course to the left in Fig. 1 and the direction "axially inwardly" is vertically up in Fig. 1 (this later term is with reference to the volume to be sealed by the seal 10, which is vertically up in Figs. 1 to 4).

The lip forming surface 34 includes an annular step or shoulder 36 separating the surface 34 into a recessed liner forming surface 38 and an elastomeric seal element forming surface 40. The shoulder 36 includes an axially inwardly facing shoulder surface 42.

Referring further to Fig. 4, various parameters concerning the shoulder 36 are shown as follows: "$\alpha$" is the acute angle between the shoulder surface 42 and the liner forming surface 38; "$d$" is the perpendicular height the shoulder 36 extends above (radially outwardly of) the liner-forming surface 38, and "$t$" is the thickness of the liner 14.

According to the present invention, an important and critical relationship exists between these parameters and the initial viscosity of the elastomeric preform 18. That is, in order to properly and positively control the flow of the liner 14 by having the shoulder 36 contact the outer edge of the liner 14 and prevent the liner from flowing past the shoulder (which control significantly reduces the percentage of rejects due to improper liner flow), the preferred relationships between these parameters, according to the present invention, is as set forth below:

| Initial viscosity of the elastomeric preform 18 at 190.5°C (375°F) (in rheometer units) daN · m | Preferred values of parameters $\alpha$, d, and t |
|---|---|
| <10 | $d \geq t$ ; $\alpha \leq 85°$ |
| <15 | $d \geq 1.25t$; $\alpha \leq 80°$ |
| <20 | $d \geq 1.5t$ ; $\alpha \leq 75°$ |
| <25 | $d \geq 1.75t$; $\alpha \leq 70°$ |
| $\geq 25$ | $d \geq 2t$ ; $\alpha \leq 65°$ |

Thus, where space permits, molds will be useful with a wider range of elastomers if d is maximized and $\alpha$ is minimized.

Thus, as the viscosity increases, the height d should be increased relative to t and the angle $\alpha$ should be decreased, all as shown above.

While the above description relates to a trimmed lip seal, the present invention is also applicable to molded lip seals. The resin washer 16 can be treated prior to molding as is known by those skilled in the art, to allow the elastomer to bond to the adjacent resin liner surface. The resin liner 14 can be, for example, a fluorocarbon resin (and as stated above is preferably polytetrafluoroethylene). The present invention provides a significant reduction in the reject rate due to improper liner flow from about 15% or more when using an obtuse shoulder angle $\alpha$ to less than about 1%. In the preferred embodiment, the liner 14 has a thickness t of about 0.37 mm (.015 inch). Further, in the preferred embodiment the seal 10 is made with a molded approach angle of from about 10° to 15°. The molded approach angle is the angle between the axis of the mold and the surface 38 in Fig. 1, for example. The method of the present invention can also be used in combination with a mold having means for forming hydrodynamic pumping elements on the resin liner. While compression molding has been described above, the present invention can also be used with other molding methods such as transfer and injection molding, for example.

**Claims**

1. A method for molding an annular lip type shaft seal (10) of the type having an annular elastomeric shaft seal element (12) and a resin liner (14) integrally molded therewith and bonded thereto, comprising the steps of placing a resin liner element, an elastomeric preform (18) and a seal shell (20) in a mold (24), having an annular lip forming surface (34) provided with an annular shoulder (36) having a shoulder surface (42) facing said liner element and adapted to contact an outer edge of said liner element during molding, said shoulder being located axially between a liner forming surface (38) and an elastomeric seal element forming surface (40), operating said mold (24) for forming said liner element into said liner (14) and causing said elastomer to flow to form said shaft seal element (12) and applying heat and pressure thereto to form the seal (10), said method being characterised in that it comprises the following steps of:

(a) placing said resin liner element having a predetermined thickness t and said shell (20) in said mold (24);

(b) placing in said mold (24) with said resin liner element and said shell (20) said elastomeric preform (18) having a predetermined initial viscosity value "V", measured at 190.5°C (375°F) and expressed in daN . m;

(c) arranging said shoulder (36) so as to make an acute angle $\alpha \leq 85°$ with said liner forming surface (38) said shoulder having a perpendicular height d above said liner forming surface (38), wherein $d \geq t$;

(d) selecting values for $\alpha$ and d in relation to the initial viscosity chosen, increasing "V" demanding increasing d/t ratios and decreasing values for $\alpha$, thereby preventing said resin liner element from flowing axially past said shoulder (36).

2. The method according to claim 1 characterised in that said elastomeric preform placing step comprises placing in said mold (24) an elastomeric preform (18) having an initial viscosity V in rheometer units $V < 15$ daN . m at 190,5°C (375°F), and said providing step includes providing $\alpha \leq 80°$ and providing $d \geq 1,25$ t.

3. The method according to claim 1 characterised in that said elastomeric preform placing step comprises placing in said mold (24) an elastomeric preform (18) having an initial viscosity V in rheometer units of $V < 20$ daN · m at 190,5°C (375°F) and said providing step includes providing $d \leq 75°$ and providing $d \geq 1,5$ t.

4. The method according to claim 1 characterised in that said elastomeric preform placing step comprises placing an elastomeric preform (18) having an initial viscosity V in rheometer units at 190,5°C of $V < 25$ daN · m, and said providing step includes providing $\alpha \leq 70°$ and providing $d \geq 1,75$ t.

5. The method according to claim 1 characterised in that said elastomeric preform placing step comprises placing an elastomeric preform (18) having an initial viscosity V in rheometer units at 190,5°C of $V \geq 25$ daN · m and said providing step includes providing $\alpha \leq 65°$ and providing $d \geq 2$ t.

6. The method according to claim 1 characterised in that said resin liner element is a fluorocarbon resin.

7. The method according to claim 1, characterised in that said resin liner element is polytetrafluoroethylene.

8. The method according to claim 1 characterised in that said method further includes forming hydrodynamic pumping elements on said resin liner (14) substantially simultaneously with said forming step.

9. The method according to claim 1 characterised that said providing step comprises providing $\alpha$ in the range of from 85° to 65° and providing d in the range of from 1 t to 2 t.

10. The method according to one of the claims 1 to 9 characterised in that said method includes placing said resin liner element in said mold (24) as a flat washer (16) and including forming said flat resin washer (16) into a resin lip liner (14); flowing said elastomeric preform (18) into a lip type shaft seal element (12) substantially simultaneously with said forming step during closing said mold (24); bonding said lip liner (14) to said seal element (12) and substantially simultaneously curing said elastomer while said mold (24) is closed; opening said mold (24); and removing the formed, cured and bonded seal (10) from the mold.

11. A method for molding an annular lip type shaft seal (10) of the type having an annular elastomeric shaft seal element (12) and a resin liner (14) integrally molded therewith and bonded thereto, comprising the steps of placing a resin liner element, an elastomeric preform (18) and a seal shell (20) into a mold (24), having an annular lip forming surface (34) provided with an annular shoulder (36) having a shoulder surface (42) facing said liner element and adapted to contact an outer edge of said liner element during molding, said shoulder being located axially between a liner forming surface (38) and an elastomeric seal element forming surface (40), operating said mold (24) for forming said liner element into said liner (14) and causing said elastomer to flow to form said shaft seal element (12) and applying heat and pressure thereto to form the seal (10) and further comprising the steps of closing said open mold with applying heat and pressure thereto, forming a flat washer (16) of resin liner material into a resin lip liner (14), flowing said elastomeric preform (18) into a lip type shaft seal element (12) substantially simultaneously with said forming step during closing said mold (24), bonding said lip liner (14) to said seal element (12) and substantially simultaneously curing said elastomer while said mold (24) is closed, opening said mold (24), removing the formed, cured and bonded semifinished seal assembly from the mold (24), trimming an excess portion (44) of the resin liner seal lip off said assembly to form a finished shaft seal (10) characterised by the steps of

(a) placing said resin liner element having a predetermined thickness t and said shell (20) in said mold (24);

(b) placing in said mold (24) with said resin liner element and said shell (20) said elastomeric preform (18) having a predetermined initial viscosity value "V", measured at 190.5°C (375°F) and expressed in daN . m;

(c) arranging said shoulder so as to make an acute angle $\alpha \leq 85°$ with said liner forming surface (38) and having a perpendicular height d above said liner forming surface (38), wherein $d \geq t$;

(d) selecting values for $\alpha$ and d in relation to the initial viscosity chosen, increasing "V" demanding increasing d/t ratios and decreasing values for $\alpha$, thereby preventing said resin liner element from flowing axially past said shoulder (36).

12. The method according to claim 11, characterised in that said elastomeric preform placing step comprises placing an elastomeric preform (18) having an initial viscosity V in rheometer units at 190°C (375°F) of V<15 daN.m, and said providing step includes providing d≥1,25 t and providing α≤80°.

13. The method according to claim 11, characterised in that said elastomeric preform placing step comprises placing an elastomeric preform (18) having an initial viscosity in rheometer units at 190,5°C (375°F) of V<20 daN.m, and said providing step includes providing α≤75° and providing d≥1,5 t.

14. The method according to claim 11, characterised in that said elastomeric preform placing step comprises placing an elastomeric preform (18) having an initial viscosity V in rheometer units at 190°C (375°F) of V<25 daN.m and said providing step includes providing α≤70° and providing d≥1,75 t.

15. The method according to claim 11, characterised in that said elastomeric preform placing step comprises placing an elastomeric preform (18) having an initial viscosity V in rheometer units at 190,5°C (375°F) of V≥25 daN.m, and said providing step includes providing α≤65° and providing d≥2 t.

**Patentansprüche**

1. Verfahren zum Formen einer ringförmigen Wellenlippendichtung (10) mit einem ringförmigen, aus einem elastomeren Stoff bestehenden Wellendichtungselement (12) und einer zusammen mit den Wellendichtungselement (12) geformten und mit diesem in Verbindung stehenden aus Kunstharz bestehenden Buchse (14), wobei ein aus Kunstharz bestehendes Buchsenteil, ein aus einem elastomeren Stoff bestehender Vorformling (18) und eine Dichtungshülse (20) in eine Form (24) eingesetzt werden, wobei die Form (24) eine der Bildung einer ringförmigen Lippe dienende Oberfläche (34) aufweist, die mit einer ringförmigen, eine Schulterfläche (42) aufweisenden Schulter (36) versehen ist, die dem Buchsenteil gegenüberliegt und zum Anlegen an eine äußere Kante des Buchsenteils während der Formung ausgestaltet ist, wobei die Schulter (36) axial zwischen einer, der Formung der Buchse (14) dienenden Oberfläche (38) einerseits und einer der Formung des Wellendichtungselementes (12) dienenden Oberfläche (40) andererseits angeordnet ist, wobei die Form (24) zur Formung des Buchsenteils zu der Buchse (14) betätigt wird, wodurch der elastomere Stoff mit dem Ziel der Formung des Wellendichtungselementes (12) zum Fließen gebracht wird und wobei unter Anwendung von Wärme und Druck die Wellenlippendichtung (10) geformt wird, dadurch gekennzeichnet,

a) daß das aus Kunstharz bestehende Buchsenteil mit einer vorbestimmten Dicke (t) und die Dichtungshülse (20) in die Form (24) eingesetzt werden,
b) daß in die das Buchsenteil und die Dichtungshülse (20) enthaltende Form (24) der aus elastomerem Stoff bestehende Vorformling (18) mit einer vorbestimmten anfänglichen, bei 190,5°C (375°F) gemessenen und in daNm ausgedrückten Viskosität "V" eingesetzt wird,
c) daß die Schulter (36) so angeordnet wird, daß sich bei der der Formung der Buchse (14) dienenden Oberfläche (38) ein spitzer Winkel α≤85° ergibt, wobei die Schulter (36) eine senkrechte Höhe (d) oberhalb der Oberfläche (38) aufweist mit (d)≥(t),
d) und daß die Werte für α und (d) in Abhängigkeit von der gewählten anfänglichen Viskosität ausgewählt werden, wobei steigenden Werten für "V" zunehmende Werte des Verhältnisses (d/t) und abnehmende Werte für α zugeordnet werden, wodurch verhindert wird, daß das aus Kunstharz bestehende Buchsenteil in axialer Richtung hinter die Schulter (36) fließt.

2. Verfahren nach Anspruch 1, dadurch gekennzeichnet, daß der aus elastomerem Stoff bestehende Vorformling (18) mit einer anfänglichen Viskosität "V" von V<15 daNm (rheometer units) bei 190,5°C (375°F) in die Form (24) eingesetzt wird, daß der Winkel α≤80° und daß die Höhe (d)≥1,25 (t) gewählt werden.

3. Verfahren nach Anspruch 1, dadurch gekennzeichnet, daß der aus elastomerem Stoff bestehende Vorformling (18) mit einer anfänglichen Viskosität "V" von V<20 daNm (rheometer units) bei 190,5°C (375°F) in die Form (24) eingesetzt wird, daß der Winkel α≤75° und daß die Höhe (d)≥1,5 (t) gewählt werden.

4. Verfahren nach Anspruch 1, dadurch gekennzeichnet, daß der aus elastomerem Stoff bestehende Vorformling (18) mit einer anfänglichen Viskosität "V" von V<25 daNm (rheometer units) bie 190,5°C in die Form (24) eingesetzt wird, daß der Winkel α≤70° und daß die Höhe (d)≥1,75 (t) gewählt werden.

5. Verfahren nach Anspruch 1, dadurch gekennzeichnet, daß der aus elastomerem Stoff bestehende Vorformling (18) mit einer anfänglichen Viskosität "V" von V≥25 daNm (rheometer units) bei 190,5°C in die Form (24) eingesetzt wird, daß der Winkel α≤65° und daß die Höhe (d)≥2 (t) gewählt werden.

6. Verfahren nach Anspruch 1, dadurch gekennzeichnet, daß das aus Kunstharz bestehende Buchsenteil aus einem Kunstharz auf Fluorkohlenstoffbasis besteht.

7. Verfahren nach Anspruch 1, dadurch gekennzeichnet, daß das aus Kunstharz bestehende Buchsenteil aus Polytetrafluoräthylen besteht.

8. Verfahren nach Anspruch 1, dadurch gekennzeichnet, daß auf der aus Kunstharz bestehenden Buchse (14) gleichzeitig hydrodynamische Pumpelemente angeformt werden.

9. Verfahren nach Anspruch 1, daß der Winkel α in einem Bereich von 85° bis 65° und die Höhe (d) in einem Bereich von 1 (t) bis 2 (t) gewählt werden.

10. Verfahren nach einem der Ansprüche 1 bis 9, dadurch gekennzeichnet, daß das aus Kunstharz bestehende Buchsenteil als flache Scheibe (16) in die Form (24) eingesetzt und zu einer Buchse (14) geformt wird, daß der aus einem elastomeren Stoff bestehende Vorformling (18) im wesentlichen gleichzeitig mit dem Schließen der Form (24) zu einem lippenartigen Wellendichtungselement (12) geformt wird, daß die Buchse (14) mit dem Wellendichtungselement (12) verbunden wird, wobei gleichzeitig der elastomere Stoff während des Schließens der Form (24) aushärtet, daß die Form (24) geöffnet und die geformte, ausgehärtete und abgebundene Wellenlippendichtung (10) der Form (24) entnommen wird.

11. Verfahren zum Formen einer ringförmigen Wellenlippendichtung (10) mit einem ringförmigen, aus einem elastomeren Stoff bestehenden Wellendichtungselement (12) und einer zusammen mit dem Wellendichtungselement (12) geformten und mit diesem in Verbindung stehenden, aus Kunstharz bestehenden Buchse (14), wobei ein aus Kunstharz bestehendes Buchsenteil, ein aus einem elastomeren Stoff bestehender Vorformling (18) und eine Dichtungshülse (20) in eine Form (24) eingesetzt werden, wobei die Form (24) eine der Bildung der ringförmigen Lippe dienende Oberfläche (34) aufweist, die mit einer ringförmigen, eine Schulterfläche (42) aufweisenden Schulter (36) versehen ist, die dem Buchsenteil gegenüberliegt und zum Anlegen an eine äußere Kante des Buchsenteils während der Formung ausgestaltet ist, wobei die Schulter (36) axial zwischen einer, der Formung der Buchse (14) dienenden Oberfläche (38) einerseits und einer der Formung des Wellendichtungselementes (12) dienenden Oberfläche (40) andererseits angeordnet ist, wobei die Form (24) zur Formung des Buchsenteils zu der Buchse (14) betätigt wird, wodurch der elastomere Stoff mit dem Ziel der Formung des Wellendichtungselementes (12) zum Fließen gebracht wird und wobei unter Anwendung von Wärme und Druck die Wellenlippendichtung (10) geformt wird, wobei die offene Form (24) unter Anwendung von Hitze und Druck geschlossen wird, wodurch eine flache, aus einem Kunstharzbuchsenmaterial bestehende Scheibe (16) zu einer entsprechenden lippenartigen Buchse (14) geformt wird, wobei der aus einem elastomeren Stoff bestehende Vorformling (18) im wesentlichen gleichzeitig mit den Schließen der Form (24) zu einem lippenartigen Wellendichtungselement (12) geformt wird, wobei die lippenartige Buchse (14) mit dem Wellendichtungselement (12) verbunden wird und im wesentlichen gleichzeitig während des Schließens der Form (24) der elastomere Stoff aushärtet, wobei die Form (24) geöffnet und die geformte, ausgehärtete und abgebundene, halbfertige Wellenlippendichtung (10) Form (24) entnommen wird, wobei ein Überschußteil (44) der aus Kunstharz bestehenden Dichtungslippe abgetrennt wird, um eine fertige Wellenlippendichtung (10) zu bilden, dadurch gekennzeichnet,

a) daß das aus Kunstharz bestehende Buchsenteil mit einer vorbestimmten Dicke (t) und die Dichtungshülse (20) in die Form (24) eingesetzt werden,

b) daß in die das Buchsenteil und die Dichtungshülse (20) enthaltende Form (24) der aus elastomerem Stoff bestehende Vorformling (18) mit einer vorbestimmten anfänglichen, bei 190,5°C (375°F) gemessenen, in daNm ausgedrückten Viskosität "V" eingesetzt wird,

c) daß der Schulter (36) so angeordnet wird, daß sich bei der der Formung der Buchse (14) dienenden Oberfläche (38) ein spitzer Winkel $\alpha \leq 85°$ ergibt, wobei die Schulter (36) eine senkrechte Höhe (d) oberhalb der Oberfläche (38) aufweist mit (d)$\geq$(t),

d) und daß die Werte für $\alpha$ und (d) in Abhängigkeit von der gewählten anfänglichen Viskosität ausgewählt werden, wobei steigenden Werten für "V" zunehmende Werte des Verhältnisses (d/t) und abnehmende Werte für $\alpha$ zugeordnet werden, wodurch verhindert wird, daß das aus Kunstharz bestehende Buchsenteil in axialer Richtung hinter die Schulter (36) fließt.

12. Verfahren nach Anspruch 11, dadurch gekennzeichnet, daß der aus elastomerem Stoff bestehende Vorformling (18) eine anfängliche Viskosität "V" von V<15 daNn (rheometer units) bei 190,5°C (375°F) aufweist, daß die Höhe (d)$\geq$1,25 (t) und daß der Winkel $\alpha \leq 80°$ gewählt werden.

13. Verfahren nach Anspruch 11, dadurch gekennzeichnet, daß der aus elastomerem Stoff bestehende Vorformling (18) eine anfängliche Viskosität "V" von V<20 daNm (rheometer units) bei 190,5°C (375°F) aufweist, daß der Winkel $\alpha \leq 75°$ und daß die Höhe (d)$\geq$1,5 (t) gewählt werden.

14. Verfahren nach Anspruch 11, dadurch gekennzeichnet, daß der aus elastomerem Stoff bestehende Vorformling (18) eine anfängliche Viskosität "V" von V<25 daNm (rheometer units) bei 190°C (375°F) aufweist, daß der Winkel $\alpha \leq 70°$ und daß die Höhe (d)$\geq$1,75 (t) gewählt werden.

15. Verfahren nach Anspruch 11, dadurch gekennzeichnet, daß der aus elastomerem Stoff bestehende Vorformling (18) eine anfängliche Viskosität "V" von V$\geq$25 daNm (rheometer units) bei 190,5°C (375°F) aufweist, daß der Winkel $\alpha \leq 65°$ und daß die Höhe (d)$\geq$2 (t) gewählt werden.

**Revendications**

1. Procédé pour mouler un joint étanche (10) pour un arbre, du type à lèvre annulaire et du type comportant un élément d'étanchéité (12) annulaire d'arbre, en élastomère, et un revêtement (14) en résine qui est moulé solidairement avec lui et qui lui est collé, comprenant les stades de la mise en place d'un élément de revêtement en résine, d'une préforme (18) en élastomère, et d'une coque étanche (20) dans un moule (24) comportant une surface annulaire (34) formant une lèvre et pourvue d'un épaulement annulaire (36) qui comporte une surface d'épaulement (42) en regard dudit élément de revêtement et est adapté à être en contact avec un bord extérieur dudit élément de revêtement au cours du moulage, ledit épaulement étant logé axialement entre une surface (38) de formage du revêtement et une surface (40) formant un élément de joint en élastomère, de l'emploi dudit moule (24) pour le formage dudit élément de revêtement de façon à obtenir ledit revêtement (14) et à faire fluer ledit élastomère pour former ledit élément (12) de joint d'arbre, et de l'application de la chaleur et de la pression sur celui-ci pour le formage du joint (10), ledit procédé étant caractérisé en ce qu'il comprend les stades suivants:

(a) la mise en place dudit élément de revêtement de résine ayant une épaisseur prédéterminée $t$ et de ladite coque (20) dans ledit moule (24),
(b) la mise en place dans ledit moule (24), avec ledit élément de revêtement en résine et avec ladite coque (20), ladite préforme (18) en élastomère, ayant une valeur de viscosité initiale prédéterminée "V", mesurée à 190,5°C (375°F) et exprimée en daN . m;
(c) l'établissement dudit épaulement (36) de façon à lui faire faire un angle aigu $\alpha \leq 85°$ avec ladite surface (38) formant ledit revêtement, ledit épaulement ayant une hauteur perpendiculaire $d$ au-dessus de ladite surface (38) formant ledit revêtement, avec $d \geq t$;
(d) la sélection de valeurs pour $\alpha$ et $d$ en relation avec la viscosité initiale choisie, l'augmentation de "V" entraînant l'accroissement des rapports d/t et des valeurs décroissantes pour $\alpha$, ce qui empêche ledit élément de revêtement de résine de fluer dans le sens axial au-delà dudit épaulement (36).

2. Procédé selon la revendication 1, caractérisé en ce que ledit stade de mise en place de la préforme en élastomère comprend la mise en place dans ledit moule (24) d'une préforme (18) en élastomère présentant une viscosité axiale V en unités rhéométriques V<15 daN . m à 190,5°C (375°F) et en ce que ledit stade d'établissement inclut de faire en sorte que $\alpha \leq 80°$ et que $d \geq 1,25$ t.

3. Procédé selon la revendication 1, caractérisé en ce que ledit stade de mise en place de la préforme en élastomère comprend la mise en place dans ledit moule (24) d'une préforme (18) en élastomère ayant une viscosité initiale V en unités rhéométriques de V<20 daN . m à 190,5°C (375°F) et en ce que ledit stade d'établissement inclut de faire en sorte que $\alpha \leq 75°$ et que $d \geq 1,5$ t.

4. Procédé selon la revendication 1, caractérisé en ce que ledit stade de mise en place de la préforme en élastomère comprend la mise en place d'une préforme (18) en élastomère, ayant, en unités rhéométriques, une viscosité initiale V à 190,5°C de V<25 daN . m et en ce que ledit stade d'établissement inclut de faire en sorte que $\alpha \leq 70°$ et que $d \geq 1,75$ t.

5. Procédé selon la revendication 1, caractérisé en ce que le stade de mise en place de la préforme en élastomère comprend la mise en place d'une préforme (18) en élastomère ayant, en unités rhéométriques, une viscosité initiale V à 190,5°C de V$\geq$25 daN . m et en ce que ledit stade d'établissement prévoit de faire en sorte que $\alpha \leq 65°$ et que $d \geq 2$ t.

6. Procédé selon la revendication 1, caractérisé en ce que ledit élément de revêtement en résine est une résine fluorocarbonée.

7. Procédé selon la revendication 1, caractérisé en ce que ledit élément de revêtement en résine est du polytétrafluoroéthylène.

8. Procédé selon la revendication 1, caractérisé en ce que ledit procédé inclut de formage d'éléments de pompage hydrodynamiques sur ledit revêtement (14) en résine, sensiblement simultanément avec ledit stade de formage.

9. Procédé selon la revendication 1, caractérisé en ce que ledit stade d'établissement inclut de choisir $\alpha$ dans la gamme 85° à 65° et $d$ dans la gamme de 1 t à 2 t.

10. Procédé selon l'une des revendications 1 à 9, caractérisé en ce que ledit procédé inclut la mise en place dudit élément de revêtement en résine dans ledit moule (24) sous la forme d'une rondelle plate (16) et inclut le formage de ladite rondelle plate (16) en résine pour obtenir un revêtement en résine (14) en forme de lèvre; le fluage de ladite préforme (18) en élastomère pour former un élément (12) de joint d'arbre du type à lèvre sensiblement simultanément avec ledit stade de formage pendant la fermeture dudit moule (24); le collage dudit revêtement à lèvre (14) avec ledit élément de joint (12) et le durcissement, sensiblement simultanément, dudit élastomère pendant que ledit moule (24) est fermé; l'ouverture dudit moule (24); et l'enlèvement du joint formé, durci et collé, (10) hors du moule.

11. Procédé pour mouler un joint (10) d'arbre annulaire du type à lèvre et du type comportant un élément de joint (12) d'arbre annulaire en élastomère et un revêtement en résine (14) moulé solidairement avec lui et qui lui est collé, comprenant les stades de la mise en place d'un élément de revêtement en résine, d'une préforme (18) en élastomère et d'une coque (20) de joint dans un moule (24), ayant une surface 34 de formage de la lèvre annulaire pourvue d'un épaulement annulaire (36) qui présente une surface d'épaulement (42) en regard dudit élément de revêtement et est adaptée à être en contact avec un bord extérieur dudit élément de revêtement pendant le moulage, ledit épaulement étant logé axialement entre une surface (38) de formage du revêtement et une surface (40) formant l'élément de joint en élastomère, de l'emploi dudit moule (24) pour le formage dudit élément de revêtement de façon à en faire ledit revêtement (14) et à faire fluer ledit élastomère pour former ledit élément (12) de joint d'arbre, et de l'application de chaleur et de pression sur celui-ci de façon à former le joint (10), et comprenant en outre les stades de la fermeture dudit moule ouvert en lui appliquant de la chaleur et de la pression, du formage d'une rondelle plate (16) en matériau de revêtement en résine pour en faire un revêtement (14) à lèvre en résine, le fluage de ladite préforme (18) en élastomère pour en faire un élément de joint (12) d'arbre du type à lèvre, sensiblement simultanément avec ledit stage de formage, au cours de la fermeture dudit moule (24), le collage dudit revêtement de lèvre (14) avec ledit élément de joint (12) et le durcissement sensiblement simultané dudit élastomère pendant que ledit moule (24) est fermé, l'ouverture dudit moule (24), l'enlèvement de l'assemblage de joint formé, durci et collé semi-fini d'avec le moule (24), le nettoyage d'une partie excédentaire (44) du joint de revêtement en résine en l'évacuant hors dudit assemblage pour obtenir un joint d'arbre fini (10), caractérisé par les stades suivants:

(a) la mise en place dudit élément de revêtement en résine ayant une épaisseur prédéterminée $t$ et de ladite coque (20) dans ledit moule (24);

(b) la mise en place dans ledit moule (24), avec ledit élément de revêtement en résine et ladite coque (20), de ladite préforme (18) en élastomère ayant une valeur de viscosité initiale prédéterminée "V", mesurée à 190,5°C (375°F) et exprimée en daN.m;

(c) l'établissement dudit épaulement de façon à lui faire faire un angle aigu $\alpha \leq 85°$ avec ladite surface (38) formant ledit revêtement, en ayant une hauteur perpendiculaire $d$ au-dessus de ladite surface (38), formant ledit revêtement, avec $d \geq t$.

(d) la sélection de valeurs pour $\alpha$ et d en relation avec la viscosité initiale choisie, l'augmentation de "V" entraînant l'augmentation des rapports d/t et la diminution des valeurs de $\alpha$, ce qui empêche ledit élément de revêtement en résine de fluer dans le sens axial au-delà dudit épaulement (36).

12. Procédé selon la revendication 11, caractérisé en ce que ledit stade de mise en place de la préforme en élastomère comprend la mise en place d'une préformé (18) en ·astomère ayant une viscosité initiale V en uni: s rhéométriques à 190,5°C (375°F) de V<15 daN.m et ledit stade d'établissement inclut de faire en sorte que d≥1,25 t et $\alpha \leq 80°$.

13. Procédé selon la revendication 11, caractérisé en ce que ledit stade de mise en place de la préforme en élastomère comprend la mise en place d'une préforme (18) en élastomère ayant une viscosité initiale, en unités rhéométriques à 190,5°C (375°F) de V<20 daN.m et en ce que ledit stade d'établissement inclut de faire en sorte que $\alpha \leq 75°$ et que d≥1,5 t.

14. Procédé selon la revendication 11, caractérisé en ce que ledit stade de mise en place de la préforme en élastomère comprend la mise en place d'une préforme (18) en élastomère ayant une viscosité initiale V, en unités rhéométriques à 190°C (375°F) de V<25 daN.m et en ce que ledit stade d'établissement inclut de faire en sorte que $\alpha \leq 70°$ et que d≥1,75 t.

15. Procédé selon la revendication 11, caractérisé en ce que ledit stade de mise en place de la préforme en élastomère comprend la mise en place d'une préforme (18) en élastomère ayant une viscosité initiale V en unités rhéométriques à 190,5°C (375°F) de V≥25 daN.m et en ce que ledit stade d'établissement inclut de faire en sorte que $\alpha \leq 65°$ et que d≥2 t.

FIG. 1

FIG. 2

FIG. 3

FIG. 4

FIG. 5